# EUROPÄISCHE PATENTSCHRIFT

(11) **EP 2 900 167 B1**
(45) Veröffentlichungstag und Bekanntmachung des Hinweises auf die Patenterteilung: **01.11.2017**
(21) Anmeldenummer: 13782990.9
(22) Anmeldetag: 30.09.2013
(51) Int. Cl.: A61C 1/12, A61C 1/18, A61C 5/42, A61C 1/06

(54) **ZAHNÄRZTLICHES PRÄPARATIONSINSTRUMENT MIT EINEM ABWECHSELND UMKEHRBAR ROTIERENDEN WERKZEUG**
DENTAL PREPARATION INSTRUMENT HAVING A TOOL THAT ROTATES IN AN ALTERNATELY REVERSIBLE MANNER
INSTRUMENT DE PRÉPARATION DENTAIRE POURVU D'UN OUTIL ROTATIF RÉVERSIBLE EN ALTERNANCE

(30) Priorität: 28.09.2012 DE 102012217851
(43) Veröffentlichungstag der Anmeldung: 05.08.2015
(73) Patentinhaber: Sirona Dental Systems GmbH, 64625 Bensheim (DE)
(72) Erfinder: BIERBAUM, Thomas, 64625 Bensheim (DE); LAUFFER, Adelbert, 72766 Reutlingen (DE)
(74) Vertreter: Sommer, Peter
(86) Internationale Anmeldenummer: PCT/EP2013/070312
(87) Internationale Veröffentlichungsnummer: WO 2014/049167

(56) Entgegenhaltungen:
- WO-A1-82/03760
- US-A- 3 578 745
- US-A- 4 718 851

## Beschreibung

### Technisches Gebiet

Die Erfindung betrifft ein zahnärztliches Präparationsinstrument mit einem umkehrbar rotierenden Werkzeug, wie sie beispielsweise zur Behandlung von Wurzelkanälen verwendet werden. Das Präparationsinstrument weist einen Antrieb für das Werkzeug auf.

### Stand der Technik

Aus der EP 1 196 109 B1 ist ein rotierendes Handstück für die Endodontie bekannt, bei dem eine Feile so gedreht wird, dass sie zum Schneiden oder Glätten in einer ersten Richtung über einen ersten Winkelbereich rotiert und zum Räumen des Abraums in einer zweiten, der ersten Richtung entgegengesetzten Richtung über einen zweiten Winkelbereich rotiert, wobei der erste Winkelbereich größer als der zweite Winkelbereich ist und im Bereich von 90-180° bzw. von 45-120° liegt.

Auch aus der US 4,718,851 A, der US 3,578,745 und der WO 82/03760 A1 sind dentale Handstücke bekannt, die ein Werkzeug in eine abwechselnd umkehrend rotierenden Bewegung versetzen.

Aus der EP 2 438 884 A1 ist bekannt, dass der Winkelbereich zum Schneiden oder Glätten kleiner als der elastische Verdrehwinkel des Werkzeugs ist und dass der Winkelbereich zum Schneiden oder Glätten 3 bis 20 mal größer ist als der Winkelbereich zum Räumen. Bei der EP 1 196 109 B1 und der EP 2 438 884 A1 kommt jeweils ein Motor mit umkehrbarer Drehrichtung zum Einsatz, der über eine Steuerung programmierbar ist.

Dies hat den Nachteil, dass das Handstück einen Motor mit einer besonderen Elektronik benötigt, wodurch das Handstück an bestehenden dentalen Arbeitsplätzen mit einer bestehenden Motorsteuerung für einen herkömmlichen vollrotierenden Motor nicht einsetzbar ist.

### Darstellung der Erfindung

Ein erfindungsgemäßes zahnärztliches Präparationsinstrument mit einem abwechselnd umkehrbar rotierenden Werkzeug weist einen Antrieb für das Werkzeug auf, wobei der Antrieb eine fortlaufende vollrotierende Bewegung bereitstellt. Im Antriebsstrang ist vor dem Werkzeug ein Getriebe angeordnet, das die fortlaufende vollrotierende Bewegung des Antriebs in eine sich abwechselnd umkehrende rotierende Bewegung übersetzt, welche über mehrere Umkehrungen gesehen fortlaufend ist, wobei das Getriebe eine drehbar gelagerte Eingangswelle und eine drehbar gelagerte Ausgangswelle aufweist und im Getriebe ein feststehendes Zahnrad angeordnet ist, wobei auf der Eingangswelle ein Träger für ein mit dem feststehenden Zahnrad kämmendes und gegenüber dem Träger in einem Abstand R zu einer Mittelachse des feststehenden Zahnrads drehbar gelagertes Zahnrad vorgesehen ist und wobei das drehbare Zahnrad mit einem zu seiner Drehachse beabstandeten Kulissenstein verbunden ist, wobei der Kulissenstein in einer mit der Ausgangswelle verbundenen Kulissenführung geführt ist.

Durch die Anordnung des Getriebes im Präparationsinstrument ist es möglich, das Präparationsinstrument an herkömmlichen Arbeitsplätze mit einer Steuerung für vollrotierende Motoren anzuschließen. Als Getriebe kommt dabei insbesondere ein mechanisches Getriebe in Betracht.

Die Änderung des Abstandes des Kulissensteins zum Rotationszentrum der Eingangs- oder Ausgangswelle erzeugt im Zusammenspiel mit der Kulissenführung abwechselnd positive und negative Rotationsrichtungen, die durch geeignete Wahl der geometrischen Verhältnisse zu einem Drehrichtungswechsel an der Ausgangswelle führen.

Vorteilhafterweise kann der Kulissenstein auf einem sich von der Drehachse des drehbaren Zahnrades weg erstreckenden Hebel in einem Abstand D angeordnet sein, der
- entweder größer als der Radius r des drehbar gelagerten Zahnrads und kleiner als der Radius R der Drehachse des drehbar gelagerten Zahnrads um die Mittelachse des feststehenden Zahnrads ist, wenn der Radius r des drehbar gelagerten Zahnrads kleiner als der Radius R der Drehachse des drehbar gelagerten Zahnrads um die Mittelachse des feststehenden Zahnrads ist
- oder der kleiner als der Radius r des drehbar gelagerten Zahnrads und größer als der Radius R der Drehachse des drehbar gelagerten Zahnrads um die Mittelachse des feststehenden Zahnrads ist, wenn der Radius r des drehbar gelagerten Zahnrads größer als der Radius R der Drehachse des drehbar gelagerten Zahnrads um die Mittelachse des feststehenden Zahnrads ist.

Mit diesen geometrischen Verhältnissen lässt sich eine Drehrichtungsumkehr sicherstellen, wobei die entsprechenden Anteile der beiden Drehrichtung über die geometrischen Verhältnisse festlegbar sind.

Vorteilhafterweise kann der Kulissenstein auf einem sich von der Drehachse des drehbaren Zahnrades weg erstreckenden Hebel außerhalb des Umfangs des drehbaren Zahnrads angeordnet sein, wobei der Hebel mit dem drehbaren Zahnrad verbunden ist. Dadurch ist die Festlegung der Anteile des Drehwinkels nicht von der Größe des Zahnrades abhängig.

Vorteilhafterweise kann der Kulissenstein an dem drehbaren Zahnrad innerhalb des Umfangs des drehbaren Zahnrads angeordnet sein. Dadurch werden zusätzliche Bauteile vermieden.

Vorteilhafterweise kann das feststehende Zahnrad und das drehbar gelagerte Zahnrad ein Stirnrad sein, sodass die Abrollbahn eines Punktes auf dem drehbar gelagerten Zahnrad eine Epizykloide ist.

Vorteilhafterweise kann das feststehende Zahnrad ein Hohlrad und dass das drehbar gelagerte Zahnrad ein Stirnrad sein, sodass die Abrollbahn eines Punktes auf dem drehbar gelagerten Zahnrad eine Hypozykloide ist.

Vorteilhafterweise kann für die Aufnahme des Werkzeugs ein Winkelstück und als Antrieb des Werkzeugs ein Motor vorhanden sein und kann das Getriebe Teil des Winkelstücks oder Teil des Motors oder Teil eines zusätzlichen Verbindungsstücks zwischen dem Motor und dem Winkelstück sein.

### Kurze Beschreibung der Zeichnungen

Eine erfindungsgemäße Vorrichtung wird anhand der Zeichnung erläutert. Es zeigen:
- Fig. 1: ein zahnärztliches Präparationsinstrument mit einem Motor und mit einem Winkelstück und mit einem Verbindungsstück mit Getriebe;
- Fig. 2: ein zahnärztliches Präparationsinstrument mit einem Motor und mit einem Winkelstück mit integriertem Getriebe;
- Fig. 3: ein zahnärztliches Präparationsinstrument mit einem Motor mit integriertem Getriebe und mit einem Winkelstück;
- Fig. 4: ein Teilschnitt durch ein Getriebe mit einer Stirnrad-Stirnrad-Verzahnung;
- Fig. 5: das Getriebe aus Fig. 4 in Draufsicht;
- Fig. 6: ein Getriebe mit einer Hohlrad-Stirnrad-Verzahnung in Draufsicht;
- Fig. 7: ein weiteres Getriebe mit einer Hohlrad-StirnradVerzahnung in einem Längsschnitt;
- Fig. 8: einen schematischen Verlauf des Drehwinkels am Abtrieb über dem Drehwinkel am Antrieb.

### Ausführungsbeispiel

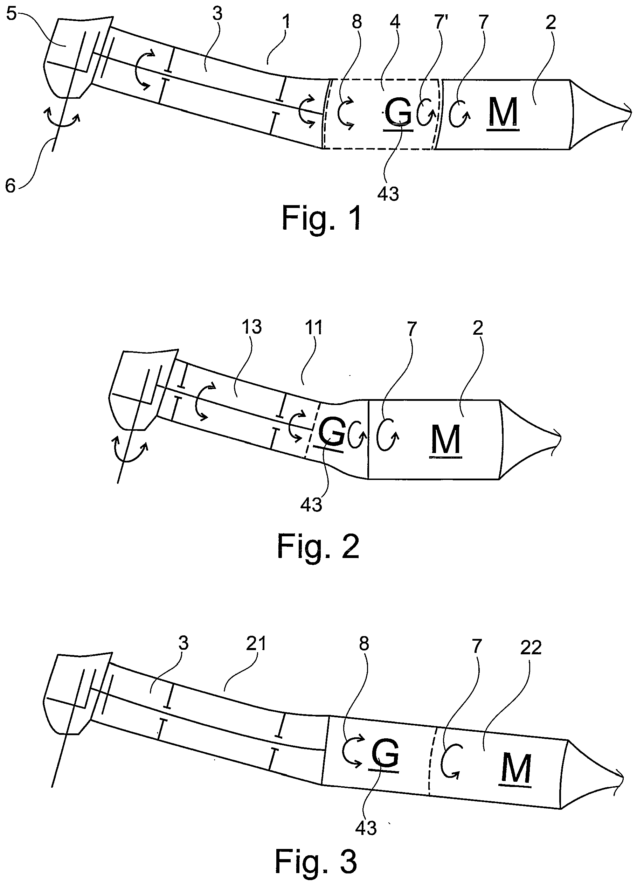

In Fig. 1 ist ein zahnärztliches Präparationsinstrument 1 schematisch dargestellt, welches einen Antrieb in Form eines Motors 2 und ein Winkelstück 3 umfasst, wobei zwischen diesen beiden ein Verbindungsstück 4 mit einem Getriebe 43 angeordnet ist. Der Motor 2 ist mit einem nicht näher bezeichneten Schlauch verbunden, durch den Versorgungsleitungen geführt sind, beispielsweise um die elektrische Versorgung des Motors sicherzustellen, aber auch gegebenenfalls um Medien wie Licht, Wasser oder Luft bereit zu stellen.

Das Winkelstück 3 weist einen Kopf 5 auf, in dem ein Werkzeug 6 drehbar gelagert ist. Die Drehbewegung des Motors 2, dargestellt durch den Pfeil 7, wird in das Verbindungsstück 4 übertragen und über das dort angeordnete Getriebe G, auch versehen mit dem Bezugszeichen 43 in eine sich abwechselnd umkehrende rotierende Bewegung übersetzt, dargestellt durch den Doppelpfeil 8. Diese abwechselnd umkehrende rotierende Bewegung wird durch das Winkelstück 3 auf das Werkzeug 6 übertragen.

In Fig. 2 ist ein zahnärztliches Präparationsinstrument 11 gezeigt, bei dem das Getriebe 43 in das Winkelstück 13 integriert ist, so dass am Eingang des Winkelstücks 13 eine von einem Motor stammende vollrotierende Bewegung angenommen werden kann.

In Fig. 3 ist ein zahnärztliches Präparationsinstrument 21 dargestellt, bei dem das Winkelstück 3 aus Fig. 1 mit einem Motor 22 verbunden werden kann, welcher mit einem Getriebe versehen ist, das die vollrotierende Bewegung des Motors in eine sich abwechselnd umkehrende Rotierbewegung übersetzt, dargestellt durch den Doppelpfeil 8 und den Pfeil 7.

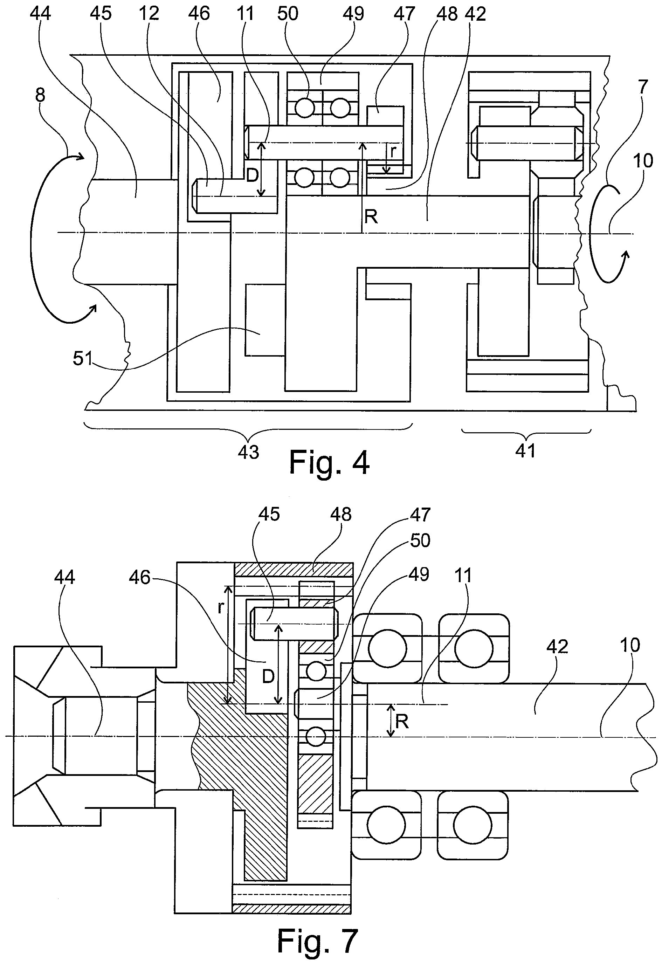

In Fig. 4 ist ein Teilschnitt durch ein Getriebe 43 mit einer Stirnrad-Stirnrad-Verzahnung dargestellt. Dabei wird die von einem nicht dargestellten Motor bereitgestellte vollrotierende Bewegung um eine Mittelachse 10 , dargestellt durch den Pfeil 7, mittels eines Untersetzungsgetriebes 41 auf einen gewünschten Drehzahlbereich übersetzt, so dass an einer Eingangswelle 42 des Getriebes 43 ebenfalls eine vollrotierende Bewegung um die Mittelachse 10 vorliegt. Das Getriebe 43 weist eine drehbar gelagerte Ausgangswelle 44 auf, die eine sich abwechselnd umkehrende rotierende Bewegung um die Mittelachse 10, dargestellt durch den Pfeil 8, ausführt.

Die Umsetzung von der vollrotierenden Bewegung des Antriebs in die sich abwechselnd umkehrende rotierende Bewegung an der Ausgangswelle 44 erfolgt unter Verwendung einer Kulissensteuerung, in der ein eine vollrotierende Bewegung ausführender Kulissenstein 45 in einer mit der Ausgangswelle 44 verbundenen Kulissenführung 46 geführt ist. Der Kulissenstein 45 ist dabei mit einem drehbar gelagerten Zahnrad 47 drehfest verbunden, dessen Drehachse 11 einen Abstand R zur Mittelachse 10 der Eingangswelle 42 aufweist und welches mit einem feststehenden Zahnrad 48 kämmt, wobei es sich um eine Stirnrad-Stirnrad-Verbindung der Zahnräder 47, 48 handelt und wobei das feststehende Zahnrad 48 innenliegend angeordnet ist und wobei sich das drehbar gelagerte Zahnrad 47 auf dem Außenumfang des feststehenden Zahnrads 48 abwälzt.

Die Eingangswelle 42 weist einen Träger 49 auf, in welchem eine Lageranordnung 50 für die drehbare Lagerung des drehbar gelagerten Zahnrads 47 um die Drehachse 11 vorgesehen ist.

Der Kulissenstein 45 ist mit seiner Mittelachse 12 in einem Abstand D zur Drehachse 11 des drehbar gelagerten Zahnrads 47 angeordnet, wobei hier der Kulissenstein 45 zu dem drehbar gelagerten Zahnrad 47 axial beabstandet ist, so dass das drehbar gelagerte Zahnrad 47 auf der einen Seite des Trägers 49 und der Kulissenstein 45 auf der anderen Seite des Trägers 49 angeordnet ist. Zum Massenausgleich des Kulissensteins 45 ist am Träger 49 eine Gegenmasse 51 vorgesehen. Anstelle der Gegenmasse 51 kann die Kulissensteuerung doppelt und insbesondere symmetrisch ausgeführt sein, um einen Massenausgleich herbeizuführen.

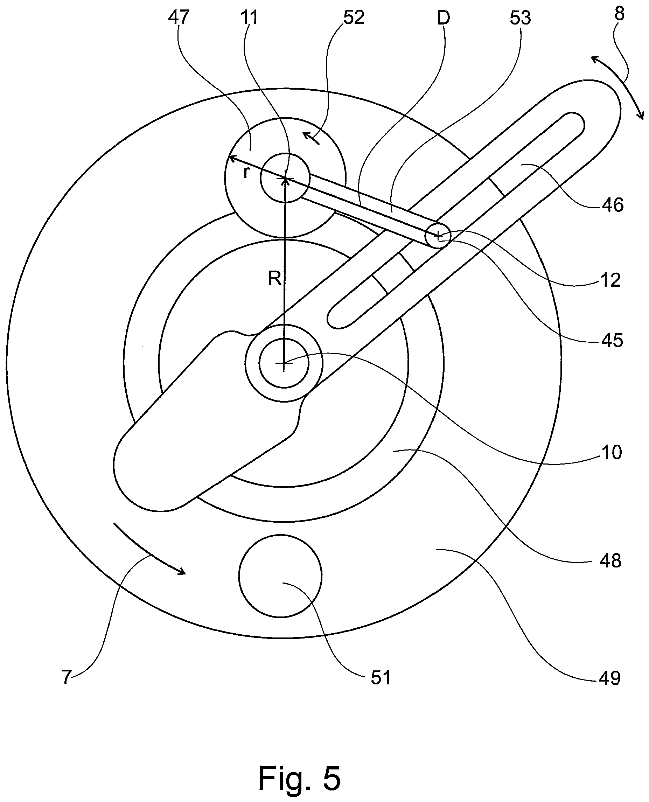

In Fig. 5 sind die geometrischen Verhältnisse schematisch dargestellt. Ausgehend von dem Träger 49, an dem die Gegenmasse 51 in einem Abstand zur Mittelachse 10 angeordnet ist, sind die beiden Zahnräder 47, 48 dargestellt, die sich beide hinter der Zeichenebene befinden und eigentlich durch den Träger 49 verdeckt sind. Das im Träger 49 gelagerte Zahnrad 47 weist einen Radius r auf und dreht sich um seine Drehachse 11, die in einem Abstand R zur Mittelachse 10 angeordnet ist, wobei es mit dem feststehenden Zahnrad 48 kämmt und sich auf diesem bei der Drehung des Trägers 49 in Richtung des Pfeils 7 abwälzt.

Zusammen mit dem Zahnrad 47 wird auch der in einem Abstand D zur Drehachse 11 des Zahnrads 47 über einen Hebel 53 am Zahnrad 47 angeordnete Kulissenstein 45 gedreht, angedeutet durch den Pfeil 52 am Zahnrad 47. Dabei befindet sich der Kulissenstein außerhalb des Umfangs des sich drehenden Zahnrads 47. Da der Kulissenstein 45 in einer mit der nicht dargestellten Ausgangswelle verbundenen Kulissenführung 46 längsverschieblich und drehbar geführt ist, folgt die Kulissenführung 46 der Drehbewegung des Kulissensteins 45 um die exzentrisch zur Mittelachse 10 angeordnete Drehachse 11 und bewegt sich dabei um die Mittelachse 10, dargestellt durch den Pfeil 8.

Der Abstand D des Kulissensteins zu der Drehachse 11 des drehbaren Zahnrades 47 ist im dargestellten Fall größer als der Radius r des drehbar gelagerten Zahnrads 47 und kleiner als der Radius R der Drehachse 11 des drehbar gelagerten Zahnrads 47 um die Mittelachse 10 des feststehenden Zahnrads 48, da der Radius r des drehbar gelagerten Zahnrads 47 kleiner als der Radius R der Drehachse 11 des drehbar gelagerten Zahnrads 47 um die Mittelachse 10 des feststehenden Zahnrads 48 ist.

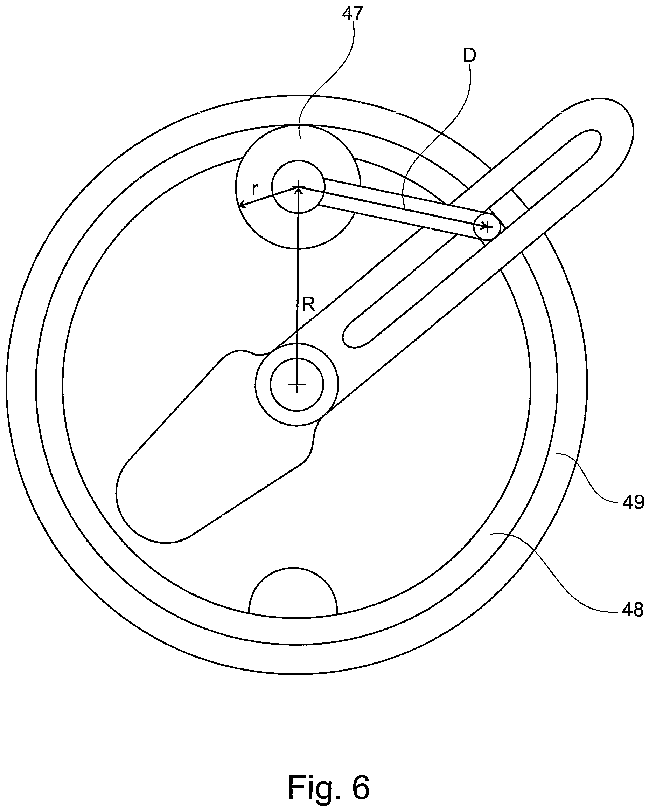

In Fig. 6 ist dargestellt, dass anstelle der Stirn-Stirn-Verzahnung auch eine Hohl-Stirn-Verzahnung des feststehenden Zahnrads 48 mit dem sich drehenden Zahrad 47 vorgesehen sein kann. An der Kinematik der Bewegung ändert sich dadurch jedoch nichts.

In Fig. 7 ist ein konstruktiver Aufbau für eine alternative Hohl-Stirn-Verzahnung gezeigt, die bezüglich der Baulänge kompakter ist. Das feststehende Zahnrad 48 umgibt das sich drehende Zahnrad 47, das auf einem Träger 49 der Eingangswelle 42 mittels einer Lagerung 50 gelagert ist und dessen Drehachse 11 in einem Abstand R zur Mittelachse 10 der Eingangswelle 42 liegt. Am sich drehenden Zahnrad 47 ist der Kulissenstein 45 in einem Abstand D zur Drehachse 11 angebracht und greift in die mit der Ausgangswelle 44 verbundene Kulissenführung 46 ein. Der Kulissenstein 45 ist dabei an dem drehbaren Zahnrad 47 innerhalb des Umfangs des drehbaren Zahnrads 47 angeordnet.

In diesem Fall ist der Abstand D des Kulissensteins 45 zu der Drehachse 11 des drehbaren Zahnrades 47 kleiner als der Radius r des drehbar gelagerten Zahnrads 47 und größer als der Radius R der Drehachse 11 des drehbar gelagerten Zahnrads 47 um die Mittelachse 10 des feststehenden Zahnrads 48. Der Radius r des drehbar gelagerten Zahnrads 47 ist dann größer als der Radius R der Drehachse 11 des drehbar gelagerten Zahnrads 47 um die Mittelachse 10 des feststehenden Zahnrads 48.

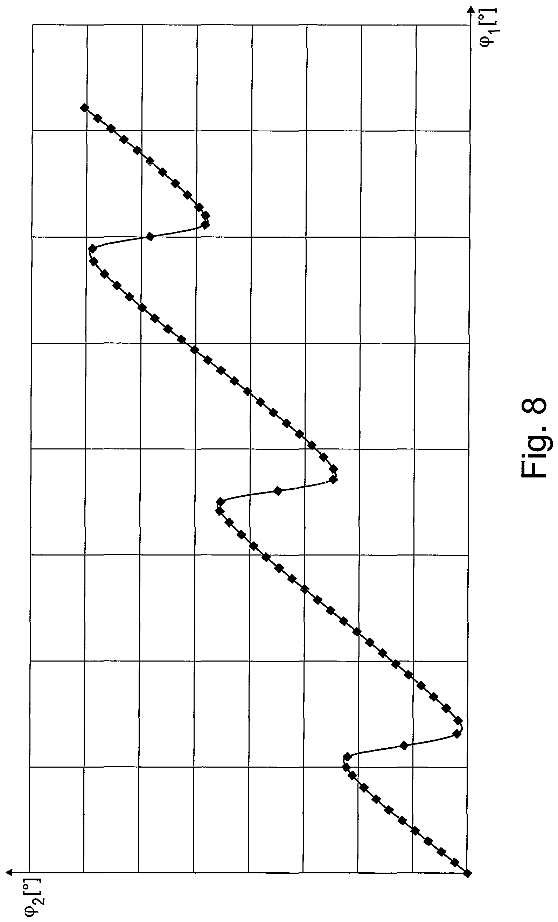

Fig. 8 zeigteinen schematischen Verlauf des Drehwinkels Phi2 am Abtrieb über dem Drehwinkel Phi1 am Antrieb. Es ist zu erkennen, dass die fortlaufende vollrotierende Bewegung des Antriebs in eine sich abwechselnd umkehrende rotierende Bewegung des Abtriebs übersetzt wird, welche trotz der Umkehrungen über mehrere Umkehrungen gesehen fortlaufend ist und daher in Summe gesehen voranschreitet.

Bei entsprechender Gestaltung der Zahnräder 47, 48 kann dabei auch ein Übersetzungsverhältnis zwischen dem Antrieb und dem Abtrieb erzielt werden, wenn dies gewünscht wird.

Grundsätzlich gilt, dass anstelle von Zahnrädern in dem Getriebe auch Reibräder verwendet werden können, um die Getriebefunktion bereitzustellen.

## Patentansprüche

1. Zahnärztliches Präparationsinstrument (1) mit einem abwechselnd umkehrbar rotierenden Werkzeug (6), wobei das Präparationsinstrument (1) einen Antrieb (2) für das Werkzeug (6) aufweist, **dadurch gekennzeichnet, dass** der Antrieb (2) eine fortlaufend rotierende Bewegung (7) bereitstellt, dass vor dem Werkzeug (6) ein Getriebe (43) angeordnet ist, das die fortlaufend vollrotierende Bewegung (7) des Antriebs (2) in eine sich abwechselnd umkehrende rotierende Bewegung (8) übersetzt, welche über mehrere Umkehrungen gesehen fortlaufend ist, wobei das Getriebe (43) eine drehbar gelagerte Eingangswelle (42) und eine drehbar gelagerte Ausgangswelle (44) aufweist, dass im Getriebe (43) ein feststehendes Zahnrad (48) angeordnet ist, dass auf der Eingangswelle (42) ein Träger (49) für ein mit dem feststehenden Zahnrad (48) kämmendes und gegenüber dem Träger (49) in einem Abstand R zu einer Mittelachse (10) des feststehenden Zahnrads (48) drehbar gelagertes Zahnrad (47) angeordnet ist und dass das drehbare Zahnrad (47) mit einem zu seiner Drehachse (11) beabstandeten Kulissenstein (45) verbunden ist, wobei der Kulissenstein (45) in einer mit der Ausgangswelle verbundenen Kulissenführung (46) geführt ist.

2. Zahnärztliches Präparationsinstrument nach Anspruch 1, **dadurch gekennzeichnet, dass** der Kulissenstein (45) in einem Abstand D zu der Drehachse (11) des drehbaren Zahnrades (47) angeordnet ist, der
- entweder größer als der Radius r des drehbar gelagerten Zahnrads (47) und kleiner als der Radius R der Drehachse (11) des drehbar gelagerten Zahnrads (47) um die Mittelachse (10) des feststehenden Zahnrads (48) ist, wenn der Radius r des drehbar gelagerten Zahnrads (47) kleiner als der Radius R der Drehachse (11) des drehbar gelagerten Zahnrads (47) um die Mittelachse (10) des feststehenden Zahnrads (48) ist
- oder der kleiner als der Radius r des drehbar gelagerten Zahnrads (47) und größer als der Radius R der Drehachse (11) des drehbar gelagerten Zahnrads (47) um die Mittelachse (10) des feststehenden Zahnrads (48) ist, wenn der Radius r des drehbar gelagerten Zahnrads (47) größer als der Radius R der Drehachse (11) des drehbar gelagerten Zahnrads (47) um die Mittelachse (10) des feststehenden Zahnrads (48) ist.

3. Zahnärztliches Präparationsinstrument nach Anspruch 2, **dadurch gekennzeichnet, dass** der Kulissenstein (45) auf einem sich von der Drehachse (11) des drehbaren Zahnrades (47) weg erstreckenden Hebel (53) außerhalb des Umfangs des drehbaren Zahnrads (47) angeordnet ist, wobei der Hebel (53) mit dem drehbaren Zahnrad (47) verbunden ist.

4. Zahnärztliches Präparationsinstrument nach Anspruch 2, **dadurch gekennzeichnet, dass** der Kulissenstein (45) an dem drehbaren Zahnrad (47) innerhalb des Umfangs des drehbaren Zahnrads (47) angeordnet ist.

5. Zahnärztliches Präparationsinstrument nach einem der Ansprüche 1 bis 4, **dadurch gekennzeichnet, dass** das feststehende Zahnrad (48) und das drehbar gelagerte Zahnrad (47) ein Stirnrad ist, sodass die Abrollbahn eines Punktes auf dem drehbar gelagerten Zahnrad (47) eine Epizykloide ist.

6. Zahnärztliches Präparationsinstrument nach einem der Ansprüche 1 bis 4, **dadurch gekennzeichnet, dass** das feststehende Zahnrad (48) ein Hohlrad und dass das drehbar gelagerte Zahnrad (47) ein Stirnrad ist, sodass die Abrollbahn eines Punktes auf dem drehbar gelagerten Zahnrad (47) eine Hypozykloide ist.

7. Zahnärztliches Präparationsinstrument nach einem der Ansprüche 1 bis 6, **dadurch gekennzeichnet, dass** für die Aufnahme des Werkzeugs (6) ein Winkelstück (3) und als Antrieb (2) des Werkzeugs (6) ein Motor vorhanden ist und dass das Getriebe (43) Teil des Winkelstücks (3) oder Teil des Motors (2) oder Teil eines zusätzlichen Verbindungsstücks (4) zwischen dem Motor (2) und dem Winkelstück (3) ist.

## Claims

1. Dental preparation instrument (1) with a tool (6) that rotates in an alternately reversible manner, wherein the preparation instrument (1) comprises a drive (2) for the tool (6), **characterized in that** the drive (2) provides a continuously rotational motion (7); that upstream of the tool (6) there is disposed a gearing system (43), which transforms the continuous, fully rotating motion (7) of the drive (2) into a rotating motion (8), which is alternately reversible and which is continuous when viewed over several reversals, wherein the gearing system (43) comprises a rotatably mounted input shaft (42) and a rotatably mounted output shaft (44); that a fixed gear wheel (48) is arranged in the gearing system (43); that a carrier (49) is arranged on the input shaft (42) for a gear wheel (47), which meshes with the fixed gear wheel (48) and is rotatably mounted relative to the carrier (49) at a distance R from a central axis (10) of the fixed gear wheel (48), and that the rotatable gear wheel (47) is connected to a sliding block (45), which is at a distance from the axis of rotation (11) of said rotatable gear wheel, wherein the sliding block (45) is guided in a sliding block guide (46) that is connected to the output shaft.

2. Dental preparation instrument, as claimed in claim 1, **characterized in that** the sliding block (45) is arranged at a distance D from the axis of rotation (11) of the rotatable gear wheel (47), said distance being
- either greater than the radius r of the rotatably mounted gear wheel (47) and less than the radius R of the axis of rotation (11) of the gear wheel (47) that is rotatably mounted about the central axis (10) of the fixed gear wheel (48), when the radius r of the rotatably mounted gear wheel (47) is less than the radius R of the axis of rotation (11) of the gear wheel (47) that is rotatably mounted about the central axis (10) of the fixed gear wheel (48),
- or less than the radius r of the rotatably mounted gear wheel (47) and greater than the radius R of the axis of rotation (11) of the gear wheel (47) that is rotatably mounted about the central axis (10) of the fixed gear wheel (48) when the radius r of the rotatably mounted gear wheel (47) is greater than the radius R of the axis of rotation (11) of the gear wheel (47) that is rotatably mounted about the central axis (10) of the fixed gear wheel (48).

3. Dental preparation instrument, as claimed in claim 2, **characterized in that** the sliding block (45) is arranged on a lever (53), which extends away from the axis of rotation (11) of the rotatable gear wheel (47), outside of the periphery of the rotatable gear wheel (47), wherein the lever (53) is connected to the rotatable gear wheel (47).

4. Dental preparation instrument, as claimed in claim 2, **characterized in that** the sliding block (45) is arranged on the rotatable gear wheel (47) inside the periphery of the rotatable gear wheel (47).

5. Dental preparation instrument, as claimed in any one of the claims 1 to 4, **characterized in that** the fixed gear wheel (48) and the rotatably mounted gear wheel (47) are a spur gear, so that the rolling path of a point on the rotatably mounted gear wheel (47) is an epicycloid.

6. Dental preparation instrument, as claimed in any one of the claims 1 to 4, **characterized in that** the fixed gear wheel (48) is a ring gear, and that the rotatably mounted gear wheel (47) is a spur gear, so that the rolling path of a point on the rotatably mounted gear wheel (47) is a hypocycloid.

7. Dental preparation instrument, as claimed in any one of the claims 1 to 6, **characterized in that** there is a contra angle handpiece (3) for receiving the tool (6), and there is a motor as the drive (2) for the tool (6), and that the gearing system (43) is part of the contra angle handpiece (3) or part of the motor (2) or part of an additional connecting piece (4) between the motor (2) and the contra angle handpiece (3).

## Revendications

1. Instrument de préparation dentaire (1) pourvu d'un outil rotatif et réversible de manière alternée (6), ledit instrument de préparation (1) possédant un dispositif d'entraînement (2) pour l'outil (6), **caractérisé en ce que** le dispositif d'entraînement (2) assure un mouvement de rotation continuel (7), **en ce qu'un** engrenage (43) est agencé avant l'outil (6) pour transformer le mouvement de rotation totale continuel (7) du dispositif d'entraînement (2) en un mouvement rotatif réversible de façon alternée (8) qui est continuel avec plusieurs inversions, ledit engrenage (43) présentant un arbre d'entrée (42) monté rotatif et un arbre de sortie (44) monté rotatif, **en ce qu'une** roue dentée fixe (48) est agencée dans l'engrenage (43), **en ce qu'un** support (49) est agencé sur l'arbre d'entrée (42), destiné à une roue dentée montée rotative (47) qui s'engrène avec la roue dentée fixe (48) en étant disposée, par rapport au support (49), à une distance R d'un axe médian (10) de la roue dentée fixe (48) et **en ce que** la roue dentée rotative (47) est raccordée à un coulisseau (45) écarté de l'axe de rotation (11) de cette dernière, ledit coulisseau (45) étant guidé dans un guide-coulisse (46) raccordé à l'arbre de sortie.

2. Instrument de préparation dentaire selon la revendication 1, **caractérisé en ce que** le coulisseau (45) est agencé à une distance D de l'axe de rotation (11) de la roue dentée rotative (47), laquelle distance est :
- soit supérieure au rayon r de la roue dentée montée rotative (47) et inférieure au rayon R de l'axe de rotation (11) de la roue dentée montée rotative (47) autour de l'axe médian (10) de la roue dentée fixe (48), lorsque le rayon r de la roue dentée montée rotative (47) est inférieur au rayon R de l'axe de rotation (11) de la roue dentée montée rotative (47) autour de l'axe médian (10) de la roue dentée fixe (48),
- soit inférieure au rayon r de la roue dentée montée rotative (47) et supérieure au rayon R de l'axe de rotation (11) de la roue dentée montée rotative (47) autour de l'axe médian (10) de la roue dentée fixe (48), lorsque le rayon r de la roue dentée montée rotative (47) est supérieur au rayon R de l'axe de rotation (11) de la roue dentée montée rotative (47) autour de l'axe médian (10) de la roue dentée fixe (48).

3. Instrument de préparation dentaire selon la revendication 2, **caractérisé en ce que** le coulisseau (45) est agencé sur un levier (53) qui va en s'écartant de l'axe de rotation (11) de la roue dentée rotative (47), hors de la circonférence de la roue dentée rotative (47), ledit levier (53) étant relié à la roue dentée rotative (47).

4. Instrument de préparation dentaire selon la revendication 2, **caractérisé en ce que** le coulisseau (45) est agencé sur la roue dentée rotative (47) à l'intérieur de la circonférence de la roue dentée rotative (47).

5. Instrument de préparation dentaire selon l'une des revendications 1 à 4, **caractérisé en ce que** la roue dentée fixe (48) et la roue dentée montée rotative (47) sont une roue dentée cylindrique, de sorte que la trajectoire d'un point sur la roue dentée montée rotative (47) forme une épicycloïde.

6. Instrument de préparation dentaire selon l'une des revendications 1 à 4, **caractérisé en ce que** la roue dentée fixe (48) est une roue à denture intérieure et **en ce que** la roue dentée montée rotative (47) est une roue dentée cylindrique, de sorte que la trajectoire d'un point sur la roue dentée montée rotative (47) forme une hypocycloïde.

7. Instrument de préparation dentaire selon l'une des revendications 1 à 6, **caractérisé en ce que** sont prévus une pièce coudée (3) destinée à recevoir l'outil (6) et un moteur servant de dispositif d'entraînement (2) de l'outil (6) et **en ce que** l'engrenage (43) fait partie de la pièce coudée (3) ou du moteur (2) ou d'une pièce de raccord supplémentaire (4) située entre le moteur (2) et la pièce coudée (3).
